(19)

Europäisches Patentamt

European Patent Office

Office européen des brevets

(11) **EP 1 895 347 A1**

(12) **EUROPEAN PATENT APPLICATION**

(43) Date of publication:
**05.03.2008 Bulletin 2008/10**

(51) Int Cl.:
*G02B 21/00* (2006.01)   *G02B 21/36* (2006.01)

(21) Application number: **06018315.9**

(22) Date of filing: **01.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Universität Zürich**
**8006 Zürich (CH)**
• **Max-Planck-Gesellschaft zur Förderung der Wissenschaften e.V.**
**80539 München (DE)**

(72) Inventors:
• **Göbel, Werner, Dr.**
**79793 Wutöschingen (DE)**
• **Helmchen, Fritjof, Prof. Dr.**
**8057 Zürich (CH)**

(74) Representative: **Schiffer, Axel Martin et al**
**Weber & Heim Patentanwälte**
**Irmgardstrasse 3**
**81479 München (DE)**

(54) **Scanning-microscope and method for operating a scanning-microscope**

(57)     The invention relates to a method for operating a scanning-microscope (100) wherein excitation light of a light source (10) is directed by means of a microscope optics (18,24) into a sample volume (40) and is focused there into a focal volume (40) and wherein the focal volume of the excitation light is scanned through the sample volume (40) by means of a scanning device (16,22). The method is characterized in that the scanning device is driven such that the focal volume describes a three dimensional non-raster scanning path within the sample volume. The invention furthermore relates to a scanning-microscope (100) and a data storage carrier on which a program for driving a control unit of a scanning microscope (100) is stored.

Fig. 1

EP 1 895 347 A1

**Description**

The present invention, in a first aspect, relates to a method for operating a scanning-microscope, in particular a two-photon-fluorescence-scanning-microscope, according to the preamble of claim 1.

In a second aspect, the invention relates to a scanning-microscope, in particular a two-photon-fluorescence-scanning-microscope, according to the preamble of claim 20.

Furthermore, the invention is directed to a data storage carrier on which a program for driving a control unit of a scanning-microscope is stored.

With a generic method for operating a scanning-microscope as disclosed e. g. in DE 197 02 753 A1, excitation light of a light source, in particular a laser, is directed by means of a microscope optics into a sample volume and is focused there into a focal volume and the focal volume of the excitation light is scanned through the sample volume by means of a scanning device.

A generic scanning-microscope as also known from DE 197 02 753 A1 includes a light source for illuminating a sample volume with excitation light, a microscope optics for guiding the excitation light into the sample volume and for focusing the excitation light into a focal volume, a scanning device for varying the position of the focal volume within the sample volume and a control unit for driving at least the scanning device.

In conventional optical scanning microscopy the light focus of a laser beam is scanned in a raster-like pattern in direction perpendicular to the optical axis, i. e. in the x- and y-directions, across a sample. Obtained fluorescence intensity values are plotted according to the raster of the scan pattern which enables the reconstruction of two dimensional images. In conventional scan-modes, the objective, or alternatively, the specimen, is driven stepwise in a direction parallel to the optical axis, e. g. the z-direction, and an image is taken at different focal positions. This approach enables the reconstruction of three dimensional image stacks, imposes however serious limitations on the time resolution of data acquisition. Even the fastest available z-stages have settling times in the order of tenths of milliseconds. Acquisition of a three dimensional image stack can thus easily exceed several seconds. Two-dimensional line scans on the other hand offer excellent temporal resolution, the scanned area is however strongly reduced and spatial resolution thus decreased.

An object of the invention is to provide a method for operating a scanning-microscope and to create a scanning-microscope which enables a faster acquisition of three-dimensional image data.

This object is achieved in accordance with the invention with the method according to claim 1 and the scanning-microscope according to claim 20.

Advantageous variants of the method and preferred embodiments of the scanning-microscope according to the invention are the subject of the dependent claims.

According to the invention, the method as set out above is further developed in that the scanning device is driven such that the focal volume describes a three-dimensional non-raster scanning path within the sample volume.

The scanning-microscope as described above, according to the invention, is further developed in that the control unit drives the scanning device such that the focal volume describes a three-dimensional non-raster scanning path within the sample volume.

A first basic concept of the invention consists in the idea to abandon the classic raster-like scan paths to obtain three dimensional image data. According to the invention, the focal volume is rather scanned through the sample using non-raster-like scan patterns. A first important advantage of the method and the microscope in accordance with the invention is that the acquisition of three-dimensional data sets is much faster since, in general, settling times of the scanning devices have to be considered to a much lesser degree. This is a crucial aspect since the faster acquisition of data opens entirely new fields for the investigation with scanning-microscopy techniques, in particular with biological and especially living specimen.

A second important advantage of the invention can be seen in the fact that there is now a much greater freedom for users to choose how the scanning path looks like in detail. This enables a user to create sample specific scan trajectories which are still faster since non-interesting regions of the sample volume can be left out.

In a preferred variant of the method according to the invention, essentially all segments of the scanning path with a length of at most 30, preferably of at most 10, and in particular of at most 3, times the lateral dimensions of the sample volume contain path components in all three spatial dimensions. This can e. g. be realized when in each xy-plane the scan path consists of a segment with a length of the order of a few times the lateral dimensions of the sample volume.

In a particularly preferred embodiment of the invention, the scanning device is driven such that the focal volume oscillates in one spatial direction, in particular in the z-direction, within the sample volume. The z-direction is preferably the direction in which, for scanning, the largest masses have to be moved. This is frequently the case in microscopes in which an objective or a sample stage or table is moved e. g. by a piezo-element.

By choosing an oscillatory movement pattern in the z-direction, very rapid movements and the associated problems with the exact definition of the focus position of the excitation light can, as far as possible, be avoided.

The latter can in particular be achieved when the focal volume is scanned in the z-direction in sinusoidal or saw-tooth-like manner.

In a simple variant of the method according to the invention, the focal volume is scanned in a xy-plane at least partially on a path which is given by an analytical function. The calculation of the scanning path can then be simplified.

The analytical function can e. g. be a spiral, a square-spiral or a Lissajous-function. But there are, of course, a plurality of other suitable analytical functions with which the xy-planes can be covered.

In a further development of this method, a plurality of path segments given by an analytical function in the xy-plane are concatenated. Thereby, smoother paths and a more effective coverage of the xy-plane can be achieved.

Still more freedom for users is provided in a so-called user-defined mode of the method according to the invention in which a plurality of points of interest I(i) are preselected by a user, where i = 1 to n and i and n being integers, and in which, subsequently, a scanning path for the position of the focal volume is calculated by a computer, the path containing at least the preselected points of interest I(i).

It is, in principle, possible to select the points of interest on the basis of previously taken image data which are taken with a scanning path using analytical functions in the xy-plane, as described above. This can be adequate if a rather coarse survey of the sample volume is sufficient.

If, however, a rather detailed view of the sample is desired, the points of interest I(i) are advantageously selected on the basis of a conventionally acquired image stack.

To obtain the shorter possible scanning path in one xy-plane, the preselected points of interest I(i) in this plane can be reordered by carrying out the following steps:

a) determination of the maximum distance between points I(i) in y-direction;
b) sorting of points above half of the maximum distance according to the x-component in rising order from left to right;
c) sorting of points below half of the maximum distance according to the x-component of the points in rising order from right to left;
d) for each point determination of the shorter path to the third next point for the two possible orders of the two intermediate points and subsequently rearrangement of the intermediate points to reduce the length of the scanning path.

It is, in principle, possible to use accusto-optical devices, like accusto-optical-tunable-filters, AOTF's, for scanning in the x- and y-directions.

In standard scanning-microscopes, however, galvanometric mirrors are used for scanning the excitation light in the x- and y-directions. Although the inertia of these devices are small as compared to a typical microscope objective, which has to be moved in the z-direction, the masses of these mirrors have to be taken into account and smooth, rather round scanning paths are preferred.

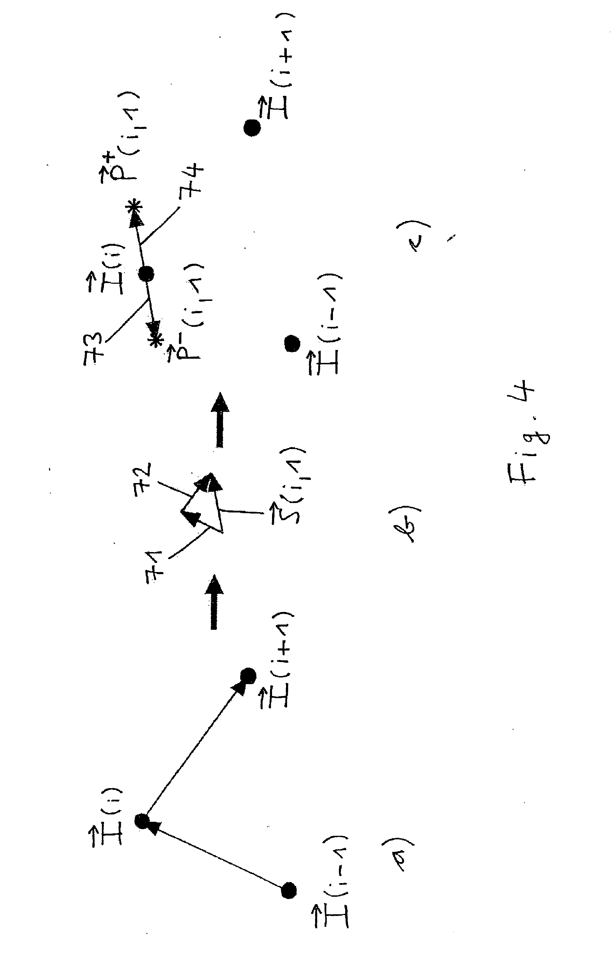

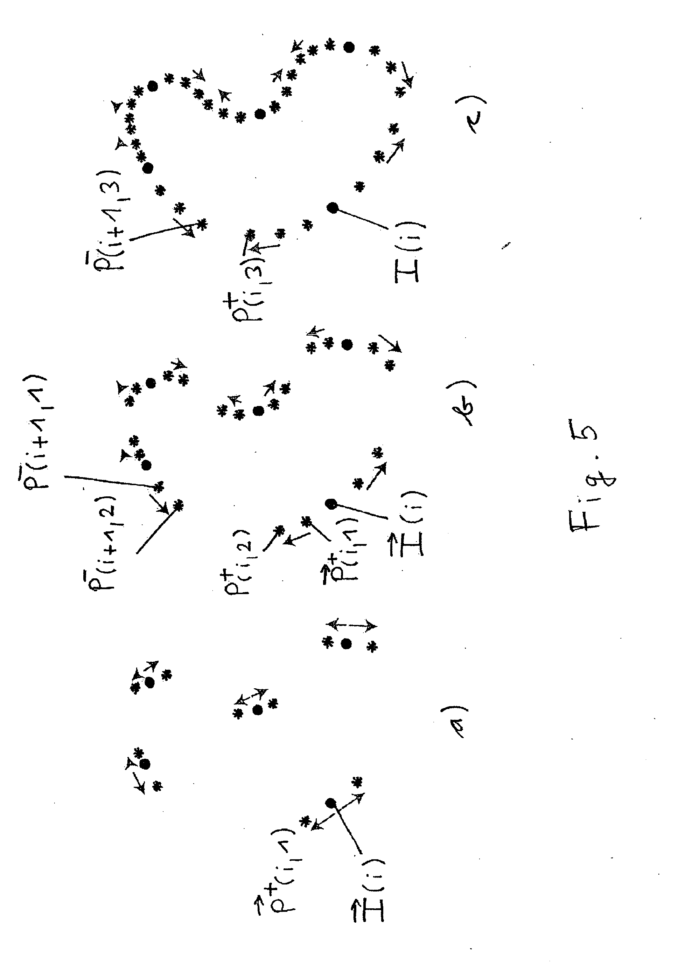

In an effort to obtain such smooth trajectories the invention proposes a new method for obtaining intermediate points between a number of preselected points of interest. This is described in detail below with respect to figures 4 and 5.

In principle, the measurement time per scan point, which is also called pixel dwell time, can be variable along the scanning path. For technical reasons, however, it is preferred to carry out the scan generation and the response acquisition, which is in particular a fluorescence signal, with a fixed and predefined pixel dwell time.

In order to obtain comparable intensities, e. g. fluorescence intensities, for different scan points, i. e. to relate fluorescence intensity values from different pixels to each other, at least adjacent scan points should be spaced equally in space.

When a continuous sinusoidal wave form is used for the motion of the objective in z-direction, the speed of z-movement changes during a vibration cycle. In a variant of the method according to the invention, therefore, on the basis of the calculated scanning path a new distribution of the scan points on the scanning path is calculated, wherein the scan points, at least within one xy-plane, are equally spaced on the scanning path.

From a practical point of view, it is convenient to preselect the points of interest I(i) layerwise, i. e. separately for each xy-layer. Then, for each layer or xy-plane, a segment of the scanning path can be generated. The plurality of segments subsequently are connected or concatenated. This can be done in another alternative of the invention in which between two different xy-planes containing points of interest I(i) intermediate scanpoints are calculated and inserted, the density of these intermediate scanpoints on the scanning path being dependent on the z-coordinate of the xy-planes and a projected distance in the xy-plane of the end points of segments in the two different xy-planes to be connected. Then, the data acquisition mode with a fixed dwell time per pixel or scan point can be maintained.

On the way to the focus in the sample volume the excitation radiation loses intensity, e. g. by absorption or scattering. In order to obtain comparable response intensities, e. g. fluorescence intensities, it is therefore furthermore advantageous to control or adjust the intensity of the excitation radiation, in particular the excitation light, in dependence of the penetration depth of the excitation radiation into the sample volume. This can in particular be done using an assumption of an essentially exponential decay of the intensity.

Due to the inertia of a piezo-element and an objective connected thereto, the actual z-position of the objective generally does not accurately match the imposed drive signals. When a sinusoidal motion of the objective is used it is, in order to obtain a given intended movement of the objective, therefore preferred to measure a mechanical response of the objective which is driven by a piezo-element and to impose an adequately amplitude and phase corrected drive signal on the piezo-element.

Improved possibilities for the generation of microscopic image data are achieved when an intensity and/or the wavelength of the excitation light is adjusted in dependence of the position on the scanning path. This can in particular be useful to improve the signal to noise ratio of the data. In an effort to impose radiation only to those parts of the sample in which one is actually interested, the excitation light can be switched off on preselected parts of the scanning path. The total amount of scattered light can thereby be reduced. Excitation with multiple wavelengths which can be varied along the scanning path is also possible.

Highly differentiated microscopic images can furthermore be obtained when regions of interest of the sample are preselected and exposed to a higher intensity of the excitation light.

A highly precise and fast adjustment or modulation of the excitation intensity can e. g. be achieved when a Pockel's cell is used as a modulation device. Alternatively, an accusto-optical modulator, AOM, can be used. The modulation device is preferable controlled or driven also by the control unit of the microscope.

The technique described above can be used in principle for all scanning microscopes in which a focus of excitation radiation is imposed on and scanned through a sample volume.

The invention can be therefore advantageously applied in laser scanning microscopes, in particular confocal and/or multiphoton fluorescence microscopes as well as beam projection systems.

The invention is also related to a data storage carrier according to claim 25, i. e. a data storage carrier on which a program for driving a control unit of a scanning microscope is stored, wherein the program enables the operation of the scanning microscope according to the methods as described above.

The control unit can be seen as a part of a computer which in particular calculates the scanning path and outputs the necessary drive signals for the scanning device for the modulation device of the radiation source, if necessary, and/or other components of the scanning microscope. All these processes can be controlled by a program which is stored on a data storage carrier according to the invention.

Further aspects and advantages of the scanning microscope according to the invention and the methods for operating same are described below in relation to the attached schematic drawings in which show:

Fig. 1: A schematic representation of a two-photon-fluorescence microscope according to the invention;

Fig. 2: Examples of possible scan trajectories in an xy-projection;

Fig. 3: Steps in a process of reordering preselected points of interest in an xy-plane;

Fig. 4: Steps in a process of constructing the first intermediate points adjacent preselected points of interest;

Fig. 5: Steps in a process of constructing further intermediate points between preselected points of interest;

Fig. 6: Steps in a process of constructing a segment of a scanning path with equally spaced scan points.

Fig. 7: Examples for connecting two segments of a scanning path situated in different xy-planes by further interpolated intermediate points.

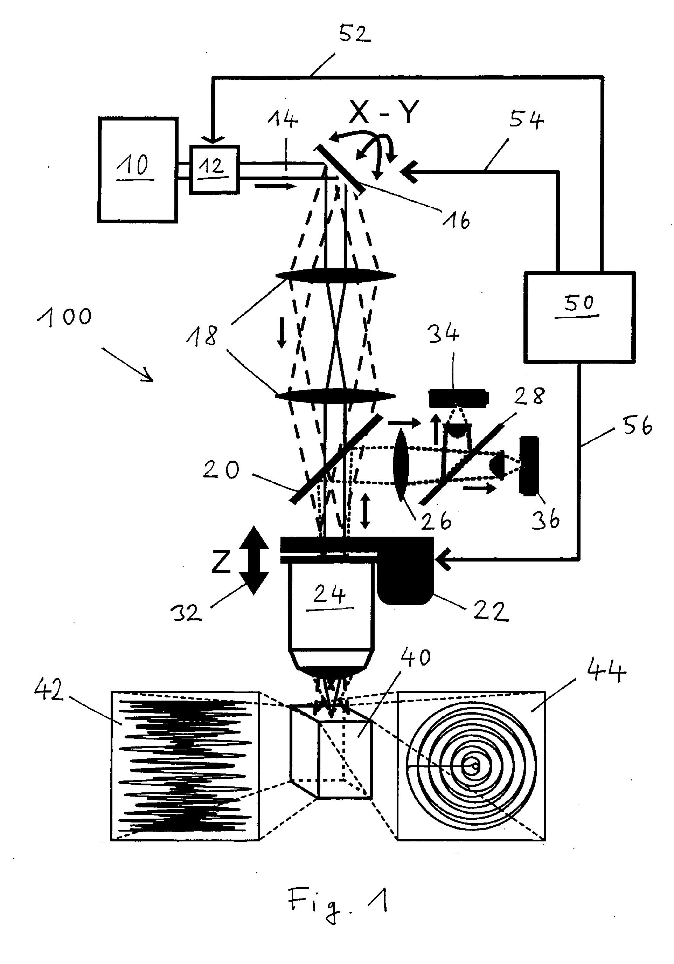

The basic principle of the new scanning-microscope will be described with respect to Fig. 1, where an embodiment of a scanning-microscope 100 according to the invention is shown.

The essential components of the scanning-microscope 100 are a light source 10, a microscope optics 18, 24, a scanning device 16, 22, detectors 34, 36 and, crucial for the invention, a control unit 50 for controlling at least the scanning device 16, 22.

The scanning-microscope 100 can in particular be a two-photon-fluorescence-scanning-microscope and the laser can be a near-infrared femtosecond laser, e. g. a Ti:Sapphire laser.

The intensity of the laser pulses can be varied with a Pockel's cell 12 which, via a connection 52, receives a drive signal from the control unit 50.

Having passed the Pockel's cell 12, the excitation light 14 hits two galvanometric mirrors 16 which serve for scanning the excitation light in the x- and y-directions. The galvanometric mirrors 16 receive a driving signal from control unit 50 by means of connection 54. Subsequently, the laser pulses pass through a microscope optics 18, 24 which is schematically depicted and consists of two lenses 18 and an objective 24. Between the lenses 18 and the objective 24 a beam splitter 20 is provided for coupling out fluorescence light coming from a sample volume 40. The objective 24 is coupled to and moveable by a piezo-element 22 which also receives a drive signal from the control unit 50 through a connection 56.

By means of the piezo-element 22 the objective 24 can be moved rapidly in the z-direction which is indicated by arrow 32. The objective 24 focuses the excitation light into a focal volume within the sample volume 40 which is schematically depicted by a cube. The spatial position of the focal volume can be varied by means of the piezo-element 22 and the galvanic mirrors 16.

The excitation light or generally the excitation radiation induces a certain response within the focal volume. This can in particular be a fluorescence, i. e. the emission of a photon. This process is preceded by the absorption of one photon in the case of simple fluorescence-microscopy and two photons in the case of two-photon-fluorescence-microscopy. In the latter case, the intensity dependence of the excitation provides confocal properties so that confocal pinholes are not necessary.

Fluorescence radiation coming from the sample volume 40 travels back the optical path through objective 24 and is then deflected by beam splitter 20 in the direction of a detection unit. This detection unit in the shown embodiment consists of two detectors 34, 36, a further color splitter 28, which serves for separating different wavelengths of fluorescence light, as well as further minor optical components, like a lens 26.

After adequate amplification and signal processing the measurement data of detectors 34, 36 are input in a not-shown computer, a part of which is the control unit 50. The computer is equipped with the standard terminals, i. e. monitor, keyboard, and serves in particular for monitoring and evaluation of the image data.

In conventional systems, beam scanning of a laser focus is generally restricted exclusively to one plane, in most cases the xy-plane, in some systems also the xz-plane. This leads to substantial drawbacks with respect to temporal resolution. To overcome this limitation and to render feasible a new variety of applications the objective in the system described herein is continuously driven in the z-direction in a sinusoidal or saw-tooth-like fashion. Repetition frequencies of up to 20 Hz and more can be achieved. Matched to the resulting oscillatory change in the focal plane is, according to the invention, a non-raster-like deflection of the laser beam in a direction perpendicular to the optical axis, i. e. in the x- and y-directions. The resulting three-dimensional scan line is excellently suited to simultaneously obtain measurements of fluorescence signals e. g. from cell bodies in a volume. For example it is possible with the method and the scanning microscope of the invention to simultaneously measure patterns of neuronal activity of up to 300 cells.

In the microscope shown in Fig. 1 both x-y-scan mirrors 16 and the z-stage, i. e. piezo-element 22 coupled to objective 24, receive a continuous pattern of position signals from control unit 50. This results in a closed scan line or scanning path in three dimensions. Prior recording of a static three dimensional image stack can reveal the anatomical structure of the volume, i. e. position of cell somata, and these data can serve later on as a reference stack for analysis. By default the objective 24 describes a sinusoidal or saw-tooth-like oscillation in z-direction, whose frequency can be varied.

Different modes can be realized for deflecting the laser beam in the x- and y-directions. For example the laser beam can describe Lissajous- or spiral patterns in the xy-plane. This is also depicted in Fig. 1 in boxes 42 and 44 which show schematic projections of the respective scanning paths. In box 42 is shown a projection of the scanning path in the xz- or yz-plane. Box 44 contains a projection of the scanning path in the xy-plane which consists of a right-hand and a left-hand spiral which are concatenated in an effort to obtain an improved coverage of the sample volume. Due to the oscillation in z-direction the motion in the xy-plane is spread out in the z-direction as can be inferred from box 42.

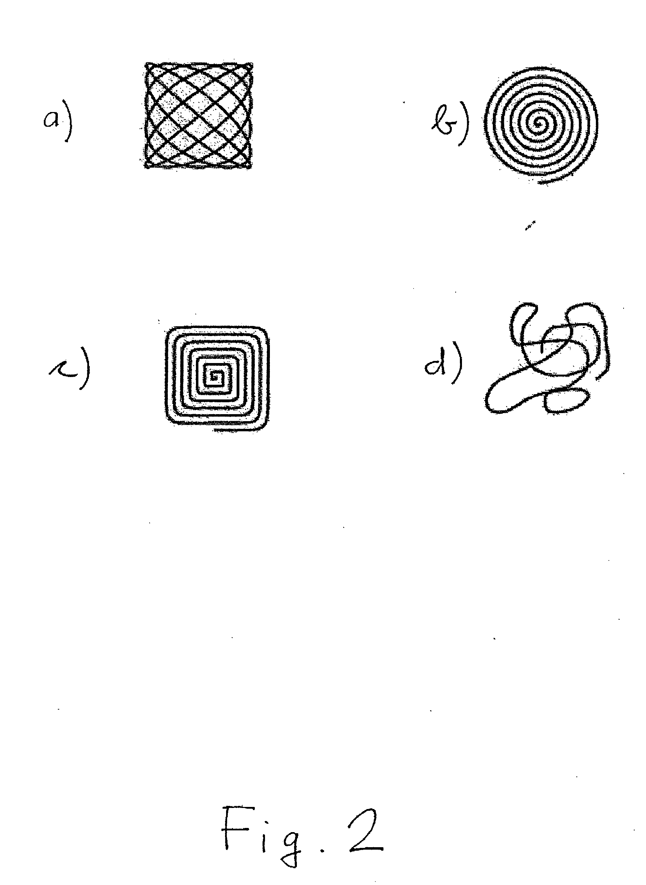

Schematic representations of these and other scanning patterns in the xy-plane are shown in Fig. 2. The spiral pattern as known from Fig. 1 is depicted in Fig. 2b. In Fig. 2a and c is shown a Lissajous and a square-spiral pattern, respectively.

Fig. 2d shows schematically a user defined scanning path which will be described further below.

The scanning patterns can be tuned to optimize the volume coverage, i. e. the number of cells hit. This can be done e. g. by varying the number of Lissajous or spiral patterns per sinus period of the objective's motion and the density of xy-scanning by adjusting the corresponding parameters of the Lissajous or spiral pattern. A goal would be that the scan line crosses as many as possible volume segments or cubes of about 5 to $10\,\mu m$ side length in a total volume of approximately 400 x 400 x 400 x $\mu m^3$ size. This should ensure that nearly all cells contained in the volume are hit by the laser. In order to better trim the three-dimensional scanning path or scan line to the volume, points of interests, i. e. cell somata, can be preselected from a previously acquired image stack and a smooth continuous line can, according to the invention, be calculated in three dimensional space passing through all the preselected points of interest.

Since for deep tissue imaging the illumination intensity depends on the depth below the tissue surface, i. e. the penetration depth of the radiation, the average laser power needs to be adjusted depending on the z-position. This can be automatically done by additionally controlling the Pockel's cell in dependence of the actual z-position of objective 24. The temporal resolution of this approach will only depend on the frequency of the objective's oscillation because every point will be hit at least once during each loop of the continuous line scan. Using standard microscope objectives it has been found that a frequency of 10 Hz can be easily achieved, which should be sufficient to resolve e. g. action potential-evoked calcium transients in neurons. Especially at higher frequencies occurring amplitude attenuations and phase shifts can be corrected.

For a continuous motion of the microscope objective 24 along the z-axis, in particular a sinusoidal function can be used. Because of the inertia of the piezo-element and the objective connected thereto, the actual z-position of the objective generally does not precisely match the imposed drive signals. For a sinusoidal motion, a frequency-dependent amplitude reduction and phase shift result, which can be corrected. These correction parameters must be newly determined for any vibration frequency and can e. g. obtain from a simultaneous measurement of the drive signal and the actual position signal.

A simple method to define a three-dimensional scan pattern is to use analytical mathematical functions in the xy-plane combined with an oscillatory movement in z-direction. The basic scan patterns in the xy-plane, consisting in particular of segments of analytical functions as described above, can be concatenated to obtain a certain number of pattern iterations per period of the objective z-movement, e. g. 10 to 14 pattern iterations. In spiral mode, successive spirals can be mirrored to each other during one half cycle of the objective oscillation so that a smooth transition from one spiral to the next can be ensured. To improve volume coverage, a 180°-phase jump can be applied at the lower and upper limits of the z-movement so that the lateral maxima of xy-scanning for downward and upward movement of the objective can be interleaved.

Alternatively, a user-defined mode in which points of interest, e. g. cell somata, are preselected from a previously acquired reference image stack, can be implemented. From these preselected points of interest a continuous smooth three-dimensional trajectory can be obtained by insertion of additional points as described in the following.

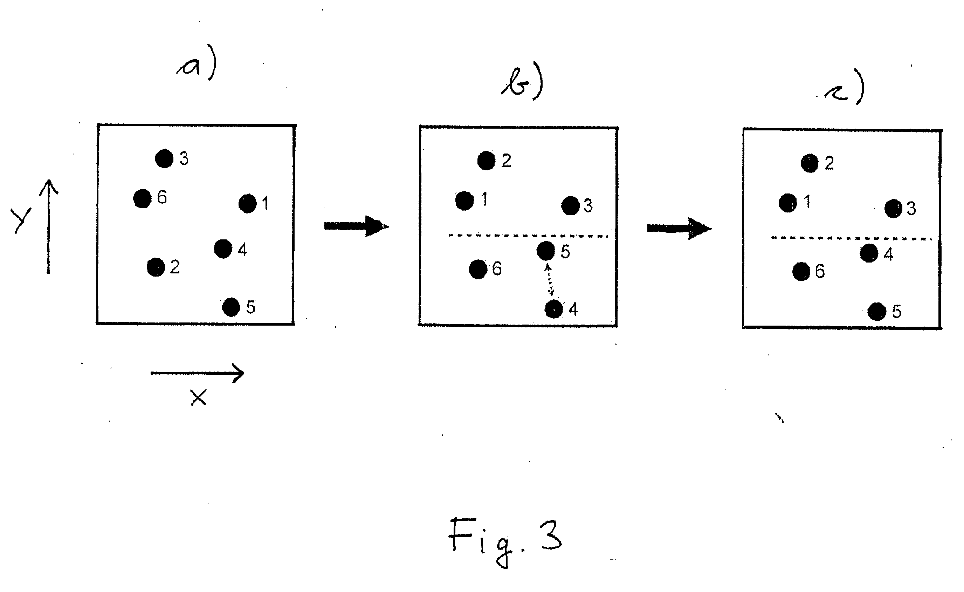

First, all preselected points I(i) within two-dimensional image plane from the reference stack are sorted clockwise. This is shown in fig. 3. Fig. 3a) shows the initial state of six preselected points I(i), i = 1 to 6, after preselection by a user.

First, the maximum distance between points in y-direction is determined. Points above half of this distance in y-direction, i. e. above the horizontal dashed line in figs. 3b) and c), are sorted from left to right according to their x-component. Correspondingly, points in the lower half are sorted from right to left according to the x-component. This is shown in fig. 3b).

In order to reduce the length of the final scan line, the points are then further rearranged. For each point, starting with point 1, the shorter path to the third-next point is determined for the two possible orders of the intermediate point, which are then reordered accordingly. This is shown in fig. 3c), where the order of points 4 and 5 is changed.

After definition of the point order, a smooth scan line can be generated by iteratively inserting new points $P^+(i, j)$ and $P(i,j)$. This will be described in the following with respect to figs. 4 and 5. There, $P^+(i,j)$ and $P^-(i,j)$ are vectors.

More specifically, k additional points $P^-(i,j)$ are calculated and inserted before each preselected point of interest I(i) on the scanning path and k additional points $P^+(i,j)$ are calculated and inserted after each preselected point of interest on the path, j = 1 to k and i,j, and k being integers.

The first additional points $P^+(i,1)$ and $P^-(i,1)$ are calculated as follows:

$$P^{\pm}(i,1) = I(i) \pm F^{\pm}(i,k)\ S(i,1),$$

where vector S(i,1) is:

$$S(i,1) = (I(i)-I(i-1))/|I(i)-I(i-1)|$$
$$+ (I(i+1)-I(i))/|I(i+1)-I(i)|,$$

and where scalar-factors $F^-(i,k)$ and $F^+(i,k)$ are:

$$F^-(i,k) = |I(i)-I(i-1)|/2k;$$

$$F^+(i,k) = |I(i+1)-I(i)|/2k.$$

Vector S(i,1) corresponds to the sum of the unity vectors from point I(i-1) to I(i) and from I(i) to I(i+1), respectively. This is shown in fig. 4b), where the respective vectors are denoted by reference numerals 71 and 72, respectively.

Vector S(i,1) is then scaled with factors F⁻(i,k) and F⁺(i,k) which roughly correspond to the distance from point I(i-1) to I(i) and from I(i) to I(i+1), respectively, divided in each case by the total number of points to be inserted between the preselected points, which is in this case 2k.

The resulting new point P⁻(i,1) and P⁺(i,1) and the scaled vectors $F^{\pm}(i,k)S(i,1)$ which are denoted with reference numerals 73 and 74, respectively, are depicted in fig. 4c).

With known points $P^{\pm}(i,j)$, $P^{\pm}(i,j-1)$, $P^{+}(i-1,j)$, and $P^{-}(i+1,j)$, where $P^{\pm}(i,0) = I(i)$, the points $P^{\pm}(i,j+1)$ are calculated as:

$$P^{\pm}(i,j+1) = P^{\pm}(i,j) \pm F^{\pm}(i,k)\ S^{\pm}(i,j+1),$$

with vectors $S^{-}(i,j+1)$ and $S^{+}(i,j+1)$:

$$S^{-}(i,j+1) = (P^{-}(i,j)-P^{+}(i-1,j))/|P^{-}(i,j)-P^{+}(i-1,j)|$$
$$+ (P^{-}(i,j-1)-P^{-}(i,j))/|P^{-}(i,j-1)-P^{-}(i,j)|;$$

$$S^{+}(i,j+1) = (P^{+}(i,j)-P^{+}(i,j-1))/|P^{+}(i,j)-P^{+}(i,j-1)|$$
$$+ (P^{-}(i+1,j)-P^{+}(i,j))/|P^{-}(i+1,j)-P^{+}(i,j)|.$$

This process is depicted in figs. 5a) to 5c) where altogether six points are inserted between adjacent preselected points.

Using this algorithm, a smooth trajectory without sharp edges can be obtained which includes all preselected points.

After predefinition of the scan trajectory in two dimensions the z-vibration of the objective has to be considered. Scan generation and fluorescence acquisition are preferably done with a fixed, predefined pixel dwell time, which can be typically 10μs. To relate fluorescence intensity values from different pixels to each other adjacent scan points should be spaced equidistantly in space. When a continuous sinusoidal wave form is used for the objective's 24 motion in the z-direction, the speed of z-movement changes during the vibration cycle, which necessitates a correction of the xy-distances. Therefore, the three-dimensional trajectory is recalculated so that the newly defined scan points are equally spaced on the scanning path.

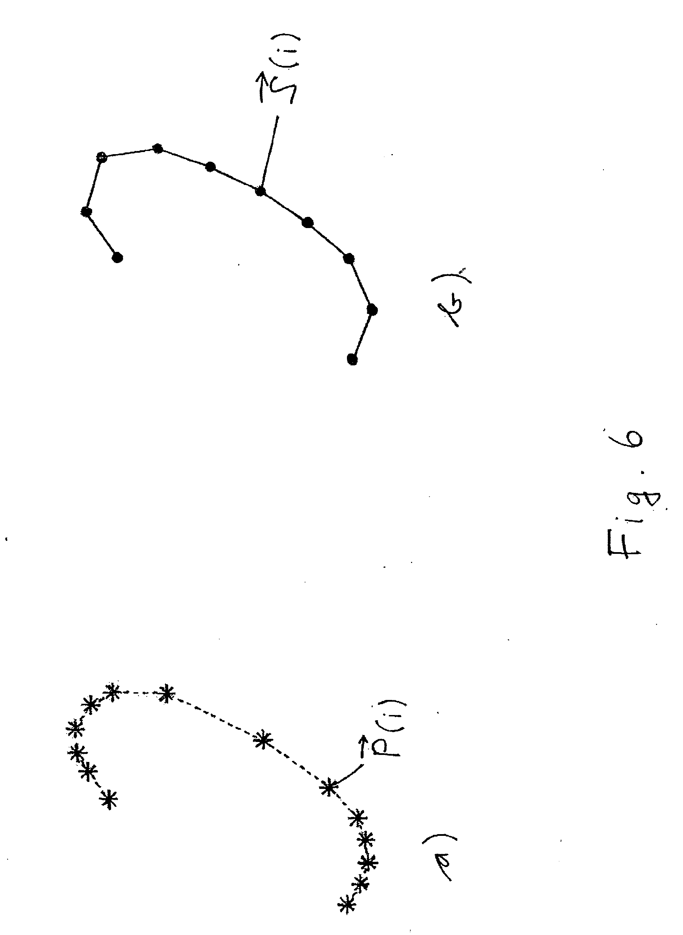

Fig. 6a) shows a segment of a scanning path as obtained after the insertion of additional points between preselected points of interest. Clearly, points P(i), represented by stars, are not equally spaced on the path. By means of an algorithm which is not described in detail a new set of points S(i) is obtained, which are equally spaced on the scanning path. This is schematically illustrated in fig. 6b).

Between each two segments of the scanning path belonging to adjacent xy-planes interpolation pixels are inserted to obtain a closed three-dimensional scanning path. On a time scale, the interpolation pixels are also equally distributed using essentially the same algorithm as before for the pixels on the segments. Depending however on the interpolation interval, i. e. the relative distance in the xy-plane that has to be covered, and the z-position of the xy-planes which corresponds to the phase of the vibration cycle, this method can result in either accelerated or slowed-down scanning until the z-position of the next image plane is reached and the next segment is scanned.

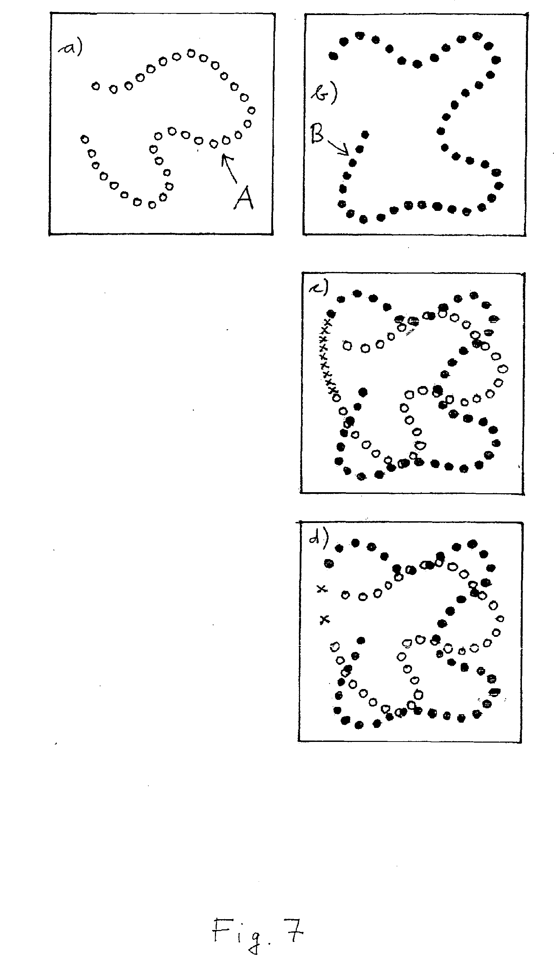

This will be explained in more detail with respect to fig. 7.

Fig. 7a) and 7b) show two different segments of the scanning path in two adjacent xy-planes of the sample. In order to obtain a closed three-dimensional scanning path, the end of segment A, represented by circles has to be connected to the beginning of segment B, represented by filled dots. This is done by inserting additional interpolation points, represented by crosses in figs. 7c) and 7d). With the situation illustrated in fig. 7c) the adjacent xy-planes, in z-direction are situated rather close to the point of return of the sinusoidal motion of the objective and, correspondingly, of the focal volume within the sample. The focal volume, therefore, moves comparingly slowly in the z-direction from the end of segment A to the beginning of segment B. Therefore and since the pixel dwell time remains constant, the density of interpolation pixels is higher as compared to the point density on segments A and B.

On the other hand, if the considered xy-planes are situated rather in the middle between the two opposite points of return of the z-vibration, the speed of the focus in z-direction is comparingly high so that only a few interpolation points are necessary. This is illustrated in fig. 7d), where only two interpolation points, represented by crosses, are inserted. The density of points in the interpolation segment is therefore smaller as compared to segments A and B.

With the present invention, a new scanning microscope and a new method for operating a scanning microscope is presented where a specimen is scanned using a three-dimensional non-raster scanning pattern. The invention has particular useful and advantageous applications in laser scanning confocal and multiphoton systems as well as beam projection systems.

Furthermore, a new variety of applications for scanning microscopy is enabled, in particular for cases in which an improved temporal resolution is desired.

**Claims**

1. Method for operating a scanning-microscope, in particular a two-photon-fluorescence-scanning-microscope, in particular according to one of the claims 20 to 24,
wherein excitation light (14) of a light source (10) is directed by means of a microscope optics (18, 24) into a sample volume (40) and is focused there into a focal volume and
wherein the focal volume of the excitation light (14) is scanned through the sample volume (40) by means of a scanning device (16, 22),
**characterized in**
**that** the scanning device (16, 22) is driven such that the focal volume describes a three dimensional non-raster scanning path within the sample volume (40).

2. Method according to claim 1,
**characterized in**
**that** essentially all segments of the scanning path with a length of at most 30, preferably of at most 10, and in particular of at most 3, times the lateral dimensions of the sample volume (40) contain path components in all three spatial dimensions.

3. Method according to claim 1 or 2,
**characterized in**
**that** the scanning device (16, 22) is driven such that the focal volume oscillates in one spatial direction, in particular in the z-direction, within the sample volume (40).

4. Method according to claim 1 to 3,
**characterized in**
**that** the focal volume is scanned in the z-direction in a sinusoidal or saw-tooth-like manner.

5. Method according to one of the claims 1 to 4,
**characterized in**
**that** the focal volume is scanned in a xy-plane at least partially on a path which is given by an analytical function.

6. Method according to claim 5,
**characterized in**
**that** the analytical function is a spiral, a square-spiral or a Lissajous-function.

7. Method according to one of the claims 1 to 6,
**characterized in**
**that** a plurality of path segments given by an analytical function in the xy-plane are concatenated to obtain a smooth path and to cover as effectively as possible the sample volume (40).

8. Method according to one of the claims 1 to 7,
**characterized in**
**that** a plurality of points of interest I(i) are preselected by a user, where i = 1 to n and i and n being integers,
**that** subsequently a scanning path for the position of the focal volume is calculated by a computer, the path containing at least the preselected points of interest I(i).

9. Method according to claim 8,
**characterized in**
**that** the points of interest I(i) are selected on the basis of a conventionally acquired image stack.

10. Method according to claim 8 or 9,
**characterized in**
**that** for reordering the points of interest I(i) in a given xy-plane the following steps are carried out:

a) determination of the maximum distance between points I(i) in y-direction;
b) sorting of points above half of the maximum distance according to the x-component in rising order from left to right;
c) sorting of points below half of the maximum distance according to the x-component of the points in rising order from right to left;
d) for each point determination of the shorter paths to the third next point for the two possible orders of the two intermediate points and subsequently rearrangement of the intermediate points to reduce the length of the scanning path.

11. Method according to claim 8 to 10,
**characterized in**
**that**, except for a first point I(1), k additional points $P^-(i,j)$ are calculated and inserted before each preselected point of interest I(i) on the scanning path and that except for a last point I(n) k additional points $P^+(i,j)$ are calculated and inserted after each preselected point of interest I(i) on the path k, with j = 1 to k and with i,j, and k being integers.

12. Method according to claim 11,
**characterized in**
**that** the additional points $P^{\pm}(i,1)$ are calculated as:

$$P^{\pm}(i,1) = I(i) \pm F^{\pm}(i,k) \, S(i,1),$$

with vector S(i,1):

$$S(i,1) = (I(i)-I(i-1))/|I(i)-I(i-1)|$$
$$+ (I(i+1)-I(i))/|I(i+1)-I(i)|$$

and scalar factors $F^-(i,k)$ and $F^+(i,k)$:

$$F^-(i,k) = |I(i)-I(i-1)|/2k;$$

$$F^+(i,k) = |I(i+1)-I(i)|/2k$$

and that with known $P^{\pm}(i,j)$, $P^{\pm}(i,j-1)$, $P^+(i-1,j)$, and $P^-(i+1,j)$, where $P^{\pm}(i,0)= I(i)$, the points $P^{\pm}(i,j+1)$ are calculated as: $P^{\pm}(i,j+1) = P^{\pm}(i,j) \pm F^{\pm}(i,k) \, S^{\pm}(i,j+1)$, with vectors $S^-(i,j+1)$ and $S^+(i,j+1)$ :

$$S^-(i,j+1) = (P^-(i,j)-P^+(i-1,j))/|P^-(i,j)-P^+(i-1,j)|$$
$$+ (P^-(i,j-1)-P^-(i,j))/|P^-(i,j-1)-P^-(i,j)|;$$

$$S^+(i,j+1) = (P^+(i,j)-P^+(i,j-1))/|P^+(i,j)-P^+(i,j-1)|$$
$$+ (P^-(i+1,j)-P^+(i,j))/|P^-(i+1,j)-P^+(i,j)|.$$

13. Method according to one of the claims 8 to 12,
**characterized in**
**that** on the basis of the calculated scanning path a new distribution of the scan points on the scanning path is calculated, the scan points, at least within one xy-plane, being equally spaced on the scanning path.

14. Method according to one of the claims 8 to 13,
**characterized in**
**that** between two different xy-planes containing points of interest I(i) intermediate scanpoints are calculated and inserted, the density of these intermediate scanpoints on the scanning path being dependent on the z-coordinate of the xy-planes and a projected distance in the xy-plane of the end points of segments in the two different xy-planes to be connected.

15. Method according to one of the claims 1 to 14,
**characterized in**
**that** an intensity of the excitation light (14) is controlled in dependence of a penetration depth of the excitation light into the sample volume (40).

16. Method according to one the claims 1 to 15,
**characterized in**
**that** a mechanical response of an objective (24) which is driven by a piezo-element (22) is measured and that for providing a given intended movement of the objective (24) a drive signal for the piezo-element (22) is amplitude and phase corrected.

17. Method according to one of the claims 1 to 16,
**characterized in**
**that** an intensity of the excitation light (14) is adjusted in dependence of the position on the scanning path.

18. Method according to one of the claims 1 to 17,
**characterized in**
**that** the excitation light (14) is switched off on preselected parts of the scanning path.

19. Method according to one of the claims 1 to 18,
**characterized in**
**that** regions of interest of the sample volume (40) are preselected and exposed to a higher intensity of the excitation light (14).

20. Scanning microscope, in particular two-photon-fluorescence-scanning-microscope, in particular for carrying out the method according to one of the claims 1 to 19,
with a light source (10) for illuminating a sample volume (40) with excitation light (14),
with a microscope optics (18, 24) for guiding the excitation light (14) into the sample volume (40) and for focusing the excitation light (14) into a focal volume,
with a scanning device (16, 22) for varying the position of the focal volume within the sample volume (40) and
with a control unit (50) for driving at least the scanning device (16, 22),
**characterized in**
**that** the control unit (50) drives the scanning device (16, 22) such that the focal volume describes a three dimensional non-raster scanning path within the sample volume (40).

**21.** Microscope according to claim 20,
**characterized in**
**that** the scanning device (16, 22) is provided with a piezo-element (22) for moving an objective (24) or a sample stage.

**22.** Microscope according to claim 20 or 21,
**characterized in**
**that** the scanning device (16, 22) is provided with a plurality of galvanometric mirrors (16) for varying the position of the focal volume in the x- and y-directions.

**23.** Microscope according to one of the claims 20 to 22,
**characterized in**
**that** the scanning device (16, 22) is provided with a plurality of accusto-optical tunable filters for varying the position of the focal volume in the x- and y-directions.

**24.** Microscope according to one of the claims 20 to 23,
**characterized in**
**that** for controlling an intensity of the excitation light (14) a modulation device (12), in particular a Pockel's-cell (12) or an accusto-optical modulator (AOM), is provided.

**25.** Data storage carrier on which a program for driving a control unit (50) of a scanning microscope is stored, wherein the program enables the operation of the scanning microscope (100) according to the methods of one of the claims 1 to 19.

Fig. 1

a)

b)

c)

d)

Fig. 2

Fig. 3

Fig. 4

Fig. 5

Fig. 6

Fig. 7

**European Patent Office**

## EUROPEAN SEARCH REPORT

Application Number

EP 06 01 8315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 1 617 250 A (ZEISS CARL JENA GMBH [DE]) 18 January 2006 (2006-01-18)<br><br>* paragraph [0001] - paragraph [0049] *<br>* paragraph [0057] *<br>* paragraph [0065] - paragraph [0066] *<br>* paragraph [0075] - paragraph [0092] *<br>----- | 1-5,7-9,<br>13,15-25<br><br>10,11 | INV.<br>G02B21/00<br>G02B21/36 |
| X | WO 2004/079405 A2 (UNIV AND COMMUNITY COLLEGE SYS [US]; PUBLICOVER NELSON GEORGE [US]; SU) 16 September 2004 (2004-09-16)<br>* figures *<br>* page 5, line 32 - page 9, line 26 *<br>* page 10, line 25 - page 13, line 14 *<br>----- | 1-7,<br>19-23,25 | |
| X | US 2002/080359 A1 (DENK WINFRIED [DE] ET AL) 27 June 2002 (2002-06-27)<br>* figures 1A,1B,2,4,7A,7B,8 *<br>* paragraph [0005] - paragraph [0010] *<br>* paragraph [0028] - paragraph [0047] *<br>* paragraph [0050] - paragraph [0053] *<br>----- | 1-7,20,<br>21,25 | |
| X | WO 2006/004743 A (UNIV WASHINGTON [US]; SEIBEL ERIC [US]; LI XINGDE [US]; LIU XIUMEI [US]) 12 January 2006 (2006-01-12)<br>* abstract *<br>* page 6, line 19 - page 7, line 18 *<br>----- | 1,20,25 | TECHNICAL FIELDS SEARCHED (IPC)<br><br>G02B |
| Y<br><br>A | WILLIAM H. PRESS ET AL.: "Numerical Recipes in C"<br>1992, CAMBRIDGE UNIVERSITY PRESS , XP002433033<br><br>* page 445 - page 447 *<br>----- | 10<br><br>11,12,14 | |
| | -/-- | | |

The present search report has been drawn up for all claims

| Place of search | Date of completion of the search | Examiner |
|---|---|---|
| Munich | 10 May 2007 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

## EUROPEAN SEARCH REPORT

**Application Number**

EP 06 01 8315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JYH-DA WEI ET AL: "A new approach to the traveling salesman problem using genetic algorithms with priority encoding" EVOLUTIONARY COMPUTATION, 2004. CEC2004. CONGRESS ON PORTLAND, OR, USA JUNE 19-23, 2004, PISCATAWAY, NJ, USA,IEEE, vol. 2, 19 June 2004 (2004-06-19), pages 1457-1464, XP010720784 ISBN: 0-7803-8515-2 * figures 3-5 * * page 1459, right-hand column * ----- | 10-12,14 | |
| Y | US 6 639 180 B1 (DE STEUR HUBERT [BE] ET AL) 28 October 2003 (2003-10-28) | 11 | |
| A | * abstract * * column 1, line 52 - column 2, line 2 * ----- | 12,14 | |
| | | | TECHNICAL FIELDS SEARCHED (IPC) |

The present search report has been drawn up for all claims

| Place of search | Date of completion of the search | Examiner |
|---|---|---|
| Munich | 10 May 2007 | Windecker, Robert |

EPO FORM 1503 03.82 (P04C01)

European Patent
Office

Application Number

EP 06 01 8315

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

21

**LACK OF UNITY OF INVENTION**
**SHEET B**

The Search Division considers that the present European patent application does not comply with the requirements of unity of invention and relates to several inventions or groups of inventions, namely:

1. claims: 1-9,13,15-25

    Scanning microscope and method for operating such a microscope so that the focus of excitation light is scanned along a three dimensional non-raster scanning path within the sample volume, wherein the technical problem is solved to optimize the control of the scanning means so that the setting times of the scanning devices have to be considered to a much lesser degree (cf. page 3, forth paragraph).
    ---

2. claims: 10-12,14

    Scanning microscope and method for operating such a microscope so that the focus of excitation light is scanned along a three dimensional non-raster scanning path within the sample volume, wherein the technical problem is solved to arrange the measurement points in a user defined scanning-mode so that the length of the scanning path is reduced (cf. paragraph bridging pages 5 and 6).
    ---

## ANNEX TO THE EUROPEAN SEARCH REPORT
## ON EUROPEAN PATENT APPLICATION NO.

EP 06 01 8315

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2007

| Patent document cited in search report | | Publication date | Patent family member(s) | | Publication date |
|---|---|---|---|---|---|
| EP 1617250 | A | 18-01-2006 | DE 102004034956 A1 | | 02-02-2006 |
| | | | GB 2416448 A | | 25-01-2006 |
| | | | US 2006011804 A1 | | 19-01-2006 |
| WO 2004079405 | A2 | 16-09-2004 | EP 1604190 A2 | | 14-12-2005 |
| | | | JP 2006520022 T | | 31-08-2006 |
| | | | US 2004217270 A1 | | 04-11-2004 |
| US 2002080359 | A1 | 27-06-2002 | US 2005122530 A1 | | 09-06-2005 |
| WO 2006004743 | A | 12-01-2006 | EP 1768564 A2 | | 04-04-2007 |
| US 6639180 | B1 | 28-10-2003 | CN 1360532 A | | 24-07-2002 |
| | | | WO 0102128 A1 | | 11-01-2001 |
| | | | EP 1207978 A1 | | 29-05-2002 |
| | | | JP 2003503213 T | | 28-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19702753 A1